# EUROPEAN PATENT APPLICATION

(11) **EP 2 383 527 A1**
(43) Date of publication of application: **02.11.2011**
(21) Application number: 10382099.9
(22) Date of filing: 29.04.2010
(51) Int. Cl.: F24J 2/52, F16B 7/04

(54) **A device for fixing solar panels**

(71) Applicant: Aluminios La Serena, S.A., 06700 Villanueva de la Serena (ES)
(72) Inventor: Suarez Rayo, Miguel, 06700 Villanueva De La Serena (ES)
(74) Representative: Capitan Garcia, Maria Nuria

(57) **Abstract**

This invention relates to a fixing device for solar panels comprising two triangular subassemblies on which the solar panels are mounted either directly or indirectly, and fixing means, first fixing means and second fixing means, where the first fixing means connect the structure formed by the fixing device onto a surface; and the seconds fixing means connect a first base profile forming the triangular subassembly with a second tilted profile and/or a third closing profile.

## Description

### TECHNICAL FIELD OF THE INVENTION

This invention relates to a fixing device for solar panels or collectors onto any surface, such as a roof.

The invention is characterised by the use of fixing means that reduce the assembly times, thus streamlining the installation of the solar panels onto a surface.

The invention is characterised by the use of fixing means that make the fixing device become a versatile device, allowing the correction of possible modifications in the works as well as making it adaptable to different surfaces and different solar panels.

### BACKGROUND OF THE INVENTION

Solar panels or collectors are usually mounted on fixing devices formed by structures consisting in a set of profiles, usually metallic, that are fixed onto a surface such as a roof.

The main drawback of this type of structures lies in their complexity and little versatility.

The complexity derives from the fact that this type of structures formed by a set of metal profiles that are coupled by fixing means must be assembled in situ. This takes a considerable amount of time, to which must be added the time taken to fix the solar panels onto the fixing device.

The little versatility forces the construction of a specific fixing device depending on the type of solar panel to be assembled and the configuration of the surface said panels are to be placed on. Therefore, each fixing device is designed according to the type of solar panel it is to hold and the type of surface on which said assembly is to be assembled, and there shall be as many fixing devices as types of solar panels and surfaces the devices are to be assembled onto. This implies a notable increase in the price of the fixing devices.

Therefore, the object of the present invention is a fixing device for solar panels whose structure is formed by a set of elements that can be easily adapted to any type of solar panel such that the device is not conditioned by the configuration of the solar panels and can be easily adapted to different types of roofs, allowing the reduction of the time taken to assemble the fixing devices and the simplification of said process of assembly with the resulting savings this entails.

### DESCRIPTION OF THE INVENTION

In view of the above, this invention relates to a fixing device for solar panels comprising:
- A set of profiles that are coupled forming at least two end triangular subassemblies on which said solar panels are fixed either directly or indirectly, such that each of the triangular subassemblies is formed by a first base profile, a second profile that is tilted with respect to the first base profile and a third profile that closes the triangular subassembly,
- First fixing means to fix each triangular subassembly onto a surface,
- Second fixing means to fix the first base profile with the second tilted profile and/or with the third closing profile,

Characterised in that,
the second fixing means comprise:
- coupling means for fixing said second fixing means to the first base profile located on two wings, a first wing and a second wing, that are separated from one another such that said separation is different in the event that the second fixing means adopt a locking assembly position,
- locking means to immobilise the position of the second fixing means with respect to the first base profile,
- sliding means in order to vary the position of the second fixing means with respect to the first base profile.

This configuration of the fixing device and especially that of the second fixing means forming it considerably facilitates the assembly of the unit by coupling it into its definitive position without having to thread said fixing means onto an end of the profile in order to later shift it into its final position.

On the other hand, the sliding configuration of the fixing means allows regulating the tilt of the profiles forming the fixing device by sliding them along the profile before locking them. This feature can be useful, for example, in cases where it is necessary to perform small regulations of the tilt of the structure in situ, for example when there have been modifications in the design and these must be corrected.

### BRIEF DESCRIPTION OF THE DRAWING

This specification is supplemented with a set of drawings illustrating the preferred embodiment, which are never intended to limit the invention.
Figure 1 shows a perspective view of an embodiment of the invention showing a fixing device formed by two triangular subassemblies of profiles and fixing means to couple them to one another and to the surface on which the fixing device is to be placed.
Figure 2 shows a perspective view of a detail of the different fixing means, the first fixing means, second fixing means and third fixing means making up this embodiment of the fixing device.
Figure 3 shows a perspective view of a detail of the first fixing means that connect the fixing device onto the surface it is placed upon, such as a roof, for example.
Figure 4A shows a perspective view of a detail of the second fixing means that connect the first base profile to the second tilted profile.
Figure 4B shows a schematic view of the second fixing means in an assembly position and in a functional position.
Figure 5 shows a perspective view of a detail of the third fixing means that connect the first fixing means to the first base profile.
Figure 6 shows a perspective view of a second embodiment of the invention showing a variant of the fixing device of Figure 1 and specifically the first fixing means.

### DETAILED DESCRIPTION OF THE PREFERRED EMBODIMENT OF THE INVENTION

This invention relates to a fixing device (10, 20) for panels comprising two triangular subassemblies (1) on which the solar panels (not shown) are mounted either directly or indirectly, and fixing means, first fixing means (3) and second fixing means (4), where the first fixing means (3) connect the structure formed by the fixing device (10, 20) onto a surface (not: shown); and the seconds fixing means (4) connect a first base profile (1.1) forming the triangular subassembly (1) with a second tilted profile (1.2) and/or a third closing profile (1.3).

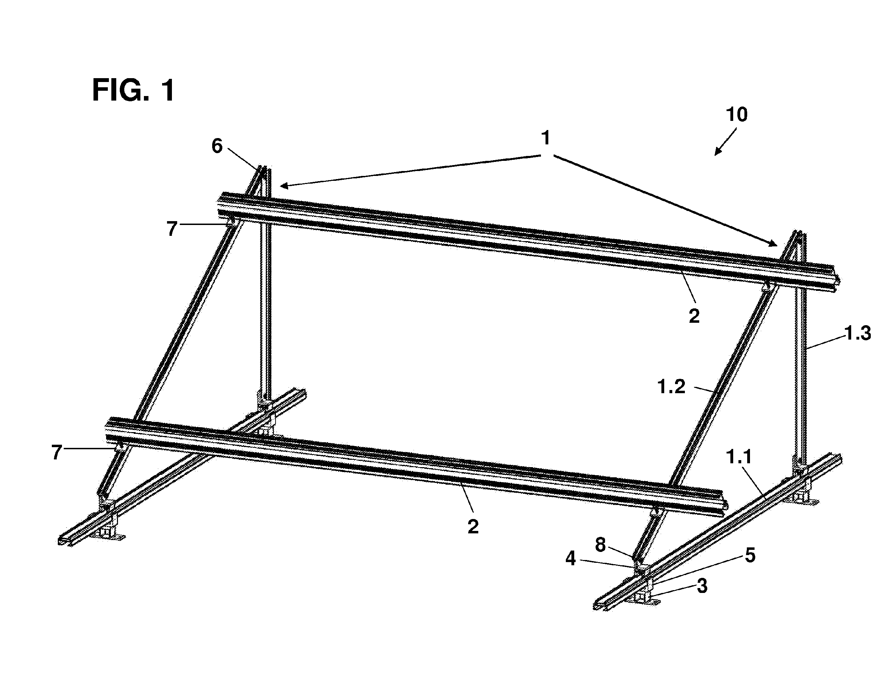

Figure 1 shows a perspective view of the assembly formed by the fixing device (10) according to an embodiment of the invention.

Said fixing device (10) is formed by at least two triangular subassemblies (1), a first subassembly and a second subassembly, onto which the solar panels are fixed either directly or indirectly (not shown).

In the event that the fixing is carried out directly, the fixing of the solar panels is performed on the triangular subassemblies (1) and specifically on second tilted profiles (1.2) that are part of each one of said triangular subassemblies (1).

In the event that the fixing is carried out indirectly, transverse profiles (2) are used onto which the solar panels are assembled, which form parallel planes to the plane of the solar plates and which are fixed by fixing means (7) onto the triangular subassemblies (1).

These fixing means (7) of the transverse profiles (2) allow them to slide and therefore also the solar panels that are integral with them, with respect to the triangular subassemblies (1) on which they are assembled, and they may slide in a longitudinal and/or a transverse direction.

Therefore, this configuration would allow the sliding of the solar plates with respect to the fixing device (1).

Each of the triangular subassemblies is formed in turn by a first base profile (1.1), a second tilted profile (1.2) and a third closing profile (1.3). These profiles are connected using different types of fixing means.

These profiles are preferably made of metal materials and especially of aluminum alloy such as, for example, Aluminium 6005 A T6.

More specifically, the first base profile (1.1) is connected to the second tilted profile (1.2) and/or with the third closing profile (1.3) via second fixing means (4) that allow providing said second and third profiles (1.2, 1.3) with the suitable tilt with respect to the plane formed by the first base profiles (1.1) forming each of the triangular subassemblies (1).

The second tilted profile (1.2) and the third closing profile (1.3) are connected by means of fourth fixing means (6) that allow the rotation of one with respect to the other during the assembly of the fixing device (10).

Moreover, the fixing device (10) has first fixing means (3) in order to couple the fixing device (10) onto the surface the solar plates are to be fixed onto, such as for example a roof.

Third fixing means (5) can be used to join together the first fixing means (3) with the first base profile (1.1).

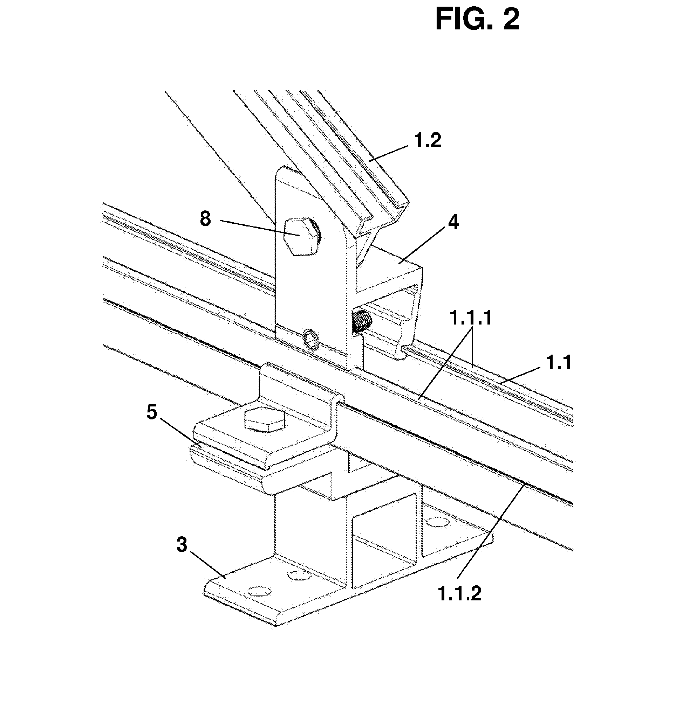

Figure 2 shows a detail of the fixing device (10) showing the first fixing means (3), the second fixing means (4) and the third fixing means (5).

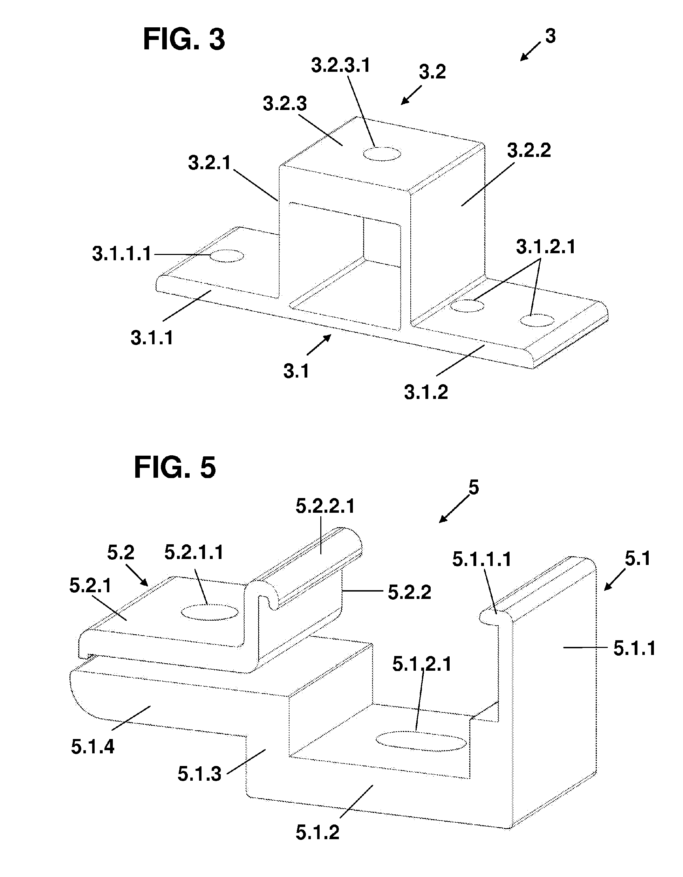

Specifically, the first fixing means (3) shown in Figure 3 and used in the embodiment of the invention shown in Figure 1 are formed by a cubic element (3.2) formed in turn by two vertical, walls (3.2.1, 3.2.2), a base wall (3.1) and an upper wall (3.2.3). The base wall (3.1) extends with respect to the vertical, walls (3.2.1, 3.2.2) forming said cubic element (3.2) forming a first wing (3.1.1) and a second wing (3.1.2).

Both the upper wall (3.2.3) and the wings (3.1.1, 3.1.2) forming the first fixing means (3) comprise bores (3.1-1.1, 3.1.2.1, 3.2.3.1) for their coupling.

Especially, the first fixing means (3) are fixed directly or indirectly onto the triangular subassemblies (1) via the bore (3.2.3.1) arranged on the upper wall (3.2.3), and the first fixing means (3) are fixed onto a surface such as a roof via bores (3.1.1.1, 3.1.2.1) on the wings (3.7..1, 3.1.2) of the base wall (3.1).

Advantageously, said bores can be threaded such as not to require the use of bolts.

These first fixing means (3) can be coupled either directly or indirectly onto the triangular subassemblies (1).

In the event that this coupling is carried out directly, said first fixing means (3) will be coupled onto the first base profile (1.1) formed by each one of the triangular subassemblies (1).

In the event that the coupling of the first fixing means (3) is carried out indirectly onto the triangular subassemblies (1), third fixing means (5) will be used as described in detail below and shown in Figure 5.

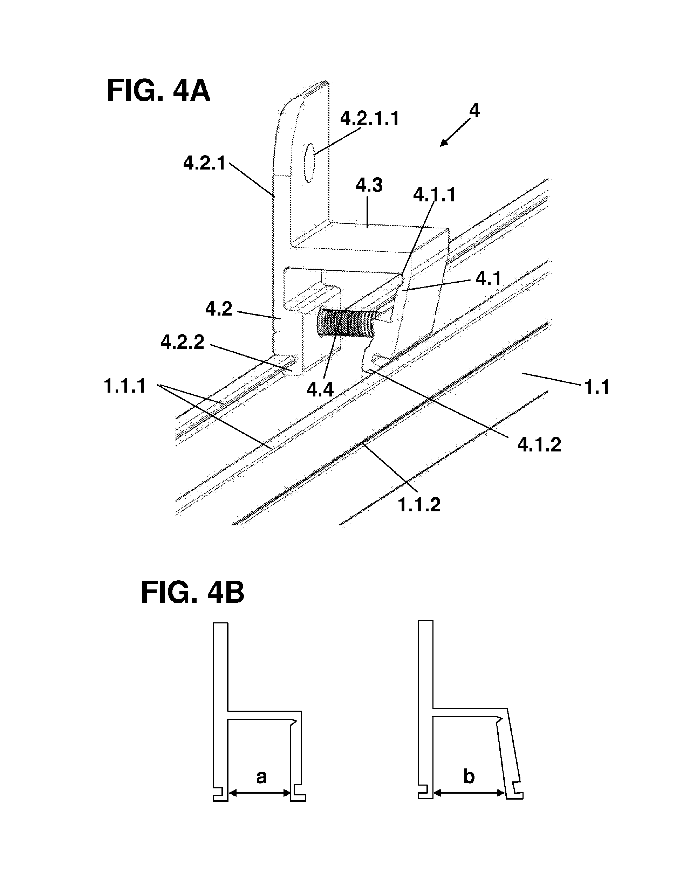

Figure 4A shows second fixing means (4) that allow coupling the first base profile (1.1) and the second tilted profile (1.2) and/or the third closing profile (1.3). Therefore, these second fixing means (4) can be used to join the first base profile (1.1) with the second tilted profile (1.2) with the third closing profile (1.3) or both.

These second fixing means (4) are those responsible for the tilt of the fixing device (10, 20), since they allow fixing the position of the second tilted profile (1.2) with respect to the first base profile (1.1) with the appropriate tilt. This tilt is determined according to the features of the solar panels together with the configuration of the surface formed by the roof and its orientation.

Therefore, the second fixing means (4) allow their assembly onto the first base profile (1.1) forming the triangular subassemblies (1) for the subsequent coupling of the second tilted profiles (1.2) and third closing profiles (1.3) in any position without having to thread them through the ends of the first base profile (1.1) and then slide them into their definitive position.

Similarly, it is not necessary to perform bores in the profiles that are conditioned to a specific configuration of the structure formed by the fixing device (10), thus providing the assembly with great versatility.

Said second fixing means are formed in turn by coupling means (4.1.2, 4.2.2), locking means (4.4) and sliding means (4.1.2, 4.2.2).

These second fixing means (4) are configured with a U-shaped body that comprises a first wing (4.1), a second wing (4.2), both vertical, and a third wing (4.3) that is horizontal.

The first and second wings (4.1, 4.2) that are vertical, and specifically their free ends, have first flaps that are coupled with second flaps (1.1.1) formed by the first base profile (1.1), the configuration of which is complementary to these. These first flaps configured on the ends of each of the wings (4.1, 4.2) form the coupling means and the sliding means (4.1.2 and 4.2.2) formed by the seconds fixing means (4). In this case the coupling means coincide with the sliding means, that is, the coupling means and the sliding means are formed by the same components.

The second wing (4.2) forming the U-shaped body extends upwards by means of an extension (4.2.1). Said extension (4.2.1) has an opening (4.2.1.1) for the coupling of second fixing means (4) with the second tilted profile (1.2) via fifth fixing means (8).

On the other hand, each one of the wings (4.1, 4.2) forming the U-shaped body has housings to fix the ends of a bolt forming the locking means (4.4) formed by the second fixing means (4).

The wings forming the U-shaped body are separated a certain distance that we shall call the separation. This separation is variable according to whether or not the fixing means are in an assembly position, that is, in a position in which said second fixing means (4) are prepared for assembly onto the first base profile (1.1) or in a functional position, that is, the position in which said fixing means are coupled with the first base profile (1.1).

In the event that the second fixing means (4) are coupled by clasping the inside of the flaps (1.1.1) formed by the first base profile (1.1) in an upper area thereof, as can be seen in figures 4.1 and 4.2, the assembly separation, separation "b", will be greater than the functional separation, separation "a".

However, the arrangement of these second fixing means (4) could be performed by clasping the outside of the first base profile (1.1), which would force a different configuration than that shown in the figures, for example, a configuration in which the flaps (1.1.1) extend towards the outside of the profile. In this case the assembly separation, separation "b", will be less than the functional separation, separation "a", as shown schematically in Figure 4B.

In the case shown in figures 4A and 4B, the first wing (4.1) formed by the U-shaped body formed by the second fixing means (4), it can have a weakening (4.1.1) in an upper area allowing slightly flexing so that the second fixing means (4) adopt a separation "b" or a separation "a" for its assembly or disassembly with respect to the first base profile (1.1).

Once the second fixing means (4) are coupled with respect to the first base profile (1.1) via the coupling means (4.1.2, 4.2.2) their position is locked using locking means (4.4) in order for them to maintain said fixed position. These locking means (4) can consist in a bolt mounted on the openings provided on the wings (4.1, 4.2).

On the other hand, before locking the seconds fixing means (4) on the first base profile (1.1), said second fixing means (4) can slide with respect to the first base profile (1.1) via sliding means (4.1.2, 4-2.2). The use of these sliding means (4.1.2, 4.2.2) can be advantageous if it is necessary to slightly adjust the tilt of the structure formed by the fixing device (10, 20).

Additionally, the third fixing means (5) shown in Figure 5 can also be used. These third fixing means (5) allow connecting at the bottom the first fixing means (3) to anchor the fixing device (10) to a surface, and at the top the first base profile (1.1). Therefore, the third fixing means (5) connect the first fixing means (3) to the first base profile (1.1) .

The third fixing means (5) are preferably formed by a first element (5.1) with a fractured configuration and a second L-shaped element (5.2).

The first element (5.1) with the fractured configuration is in turn formed by four sections, a first vertical section (5.1.1), a second lower horizontal section (5.1.2) connected to the first section (5.1.1), a third vertical section (5.1.3) connected to the second section (5.1.2) and a fourth horizontal section (5.1.4) connected to the third section (5.1.3) that extends outwards with respect to the main body formed by the first element (5.1) .

The first section (5.1.1) has on its free upper end a third flap (5.1.1.1) for coupling onto a complementary configuration (1.1.2) formed by a fifth flap located on the first base profile (1.1).

The second section (5.1.2) has a mounting hole (5.1.2.1) for the coupling of the third fixing means (5) to the first fixing means (3), located therefore in correspondence with the opening (3.2.3.1) located in said first fixing means (3).

The configuration of this opening (5.1.2.1) as a mounting allows correcting a possible bad alignment between two contiguous joints.

The fourth section (5.1.4) has an opening (not shown) to join the first element formed by the third fixing means (5) with the second element (5.2) forming such section. Therefore, said opening is located in correspondence with the opening (5.2.1.1) located in said second element (5.2).

The second element (5.2) formed by the third fixing means (5) allows the coupling of said third fixing means (5) onto the first base profile (1.1) in any position such that it is not necessary to carry out a threading operation of these third fixing means (5) onto an end of the first base profile (1.1) and its subsequent shifting into the final position, it is sufficient to place the first element (5.1) in to the position chosen with respect to the first base profile (1.1) and subsequently lock its position by fixing the second element (5.2) by screwing, for example.

This second element (5.2) of the L-shaped configuration is formed by a first horizontal section (5.2.1) and a second vertical section (5.2.2) connected to the first section(5.2.1) .

The first section (5.2.1) has an opening (5.2.1.1) for coupling this second element (5.2) with the first element (5.1) forming the third fixing means (5).

The second section (5.2.2) has on its free upper end a sixth flap (5.2.2.1) that allows the coupling of this element onto the first base profile (1.1) and, specifically, onto a complementary configuration (1.1.2) formed by a seventh flap located on the first base profile (1.1).

Therefore, these third fixing means (5) on the one hand allow their coupling into any position of the first base profile (1.1) without having to carry out a threading operation and on the other hand they prevent drilling holes onto the first base profile (1.1) in order to couple the first fixing means (3) onto said profile (1.1), making the device a versatile device the configuration of which is not conditioned by the solar panels to be used or by the type of surface such solar panels are intended for.

Although the use of these third fixing means (5) is especially advantageous, they can be dispensed with such that the joining of the first means (3) is performed directly onto the first base profile (1.1).

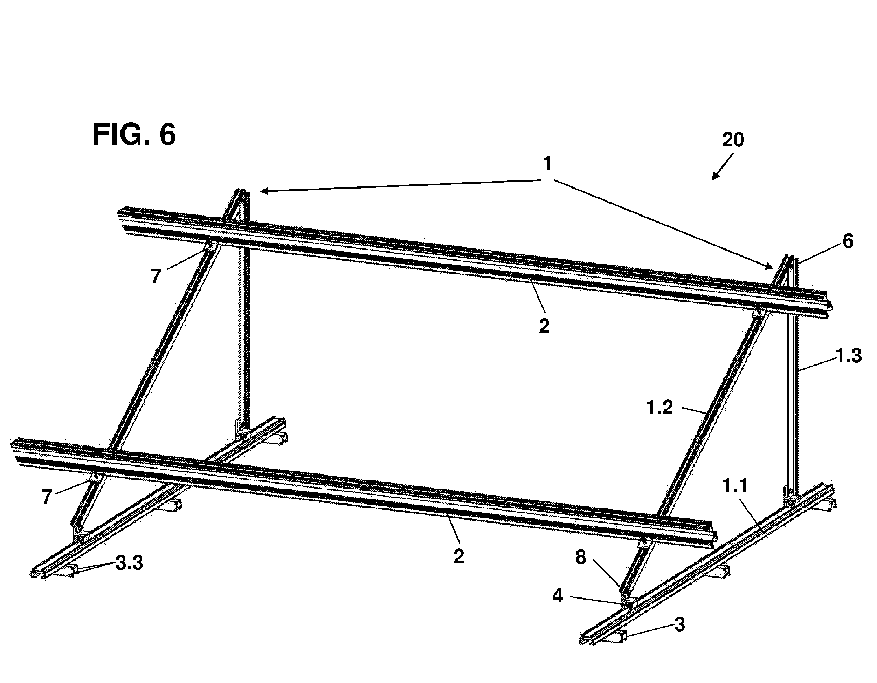

Finally, Figure 6 shows a second embodiment of the invention wherein the first fixing means (3) of the fixing device (20) adopt a different configuration with respect to that shown in Figure 3, conditioned by the type of surface onto which the fixing device (20) is fixed.

In this way, the configuration described in Figure 3 of the first fixing means (3) can be suitable as an example for a surface formed by a flat roof in concrete, asbestos cement, or formed by a multilayer, and the first fixing means represented in the embodiment shown in Figure 6 could be suitable for a surface formed by a fretwork roof, for example.

The first mixing means (3) shown in Figure 6 are formed by two plates having openings and/or fixing means for their coupling both to the first base profile (1.1) and to the roof.

## Claims

1. A fixing device for solar panels comprising:
- a set of profiles that are coupled forming at least two end triangular subassemblies (1) on which said solar panels are fixed either directly or indirectly, such that each of the triangular subassemblies (1) is formed by a first base profile (1.1), a second profile (1.2) that is tilted with respect to the first base profile (1.1) and a third profile (1.3) that closes the triangular subassembly (1),
- first fixing means (3) to fix each triangular subassembly (1) onto a surface,
- second fixing means (4) to fix the first base profile (1.1) with the second tilted profile (1.2) and/or with the third closing profile (1.3),
**characterised in that**,
the second fixing means (4) comprise:
- coupling means (4.1.2, 4.2.2) for fixing said second fixing means (4) to the first base profile (1.1) located on two wings, a first wing (4.1) and a second wing (4.2), that are separated from one another such that said separation is different in the event that the second fixing means (4) adopt an assembly position of the case in which said second fixing means (4) adopt a locking position,
- locking means (4.4) in order to immobilise second fixing means (4) with respect to the first base profile (1.1),
- sliding means (4.1.2, 4.2.2) in order to vary the position of the second fixing means (4) with respect to the first base profile (1.1).

2. A fixing device for solar panels according to claim 1, **characterised in that** the coupling means and the sliding means (4.1.2, 4.2.2) are formed by first flaps located on the free ends of the wings (4.1, 4.2) that are coupled to second flaps (1.1.1) formed by the first base profile (1.1), the configuration of which is complementary to said first flaps.

3. A fixing device for solar panels according to claim 1, **characterised in that** the second fixing means (4) are configured by a U-shaped body comprising the first wing (4.1), the second wing (4.2), both vertical, and a third wing (4.3) configured horizontally, and an extension (4.2.1) of the second wing (4.2) having an opening (4.2.1.1) for the coupling of the second fixing means (4) with the second tilted profile (1.2) via fifth fixing means (8) and **in that** the first wing (4.1) has a weakening (4.1.1) in an upper portion thereof.

4. A fixing device for solar panels according to claim 1, **characterised in that** the locking means (4.4) are formed by a bolt that is mounted into openings provided in the wings (4.1, 4.2).

5. A fixing device for solar panels according to claim 1, **characterised in that** the separation (a, b) in the assembly position of the second fixing means (4), separation "b", is greater than the separation in the functional position of the second fixing means (4), separation "a".

6. A fixing device for solar panels according to claim 1, **characterised in that** the separation (a, b) in the assembly position of the second fixing means (4), separation "b", is less than the separation in the functional position of the second fixing means (4), separation "a".

7. A fixing device for solar panels according to claim 1, **characterised in that** the first fixing means (3) are formed by a cubic element (3.2) that is in turn formed buy two vertical walls (3.2.1, 3.2.2), a base wall (3.1) and an upper wall (3.2.3) having an opening (3.2.3.1), where the base wall (3.1) extends with respect to the vertical walls (3.2.1, 3.2.2) forming said cubic element (3.2) forming a first wing (3.1.1) and a second wing (3.1.2) having openings (3.1.1.1, 3.1.2.1).

8. A fixing device for solar panels according to claim 1, **characterised in that** it comprises third fixing means (5) for the indirect fixing of the first fixing means (3) onto the triangular subassemblies (1), so that said third fixing means (5) are coupled at the bottom to the first fixing means (3) and at the top to the triangular subassemblies (1) and especially to the first base profile (1.1) forming it.

9. A fixing device for solar panels according to claim 9, **characterised in that** the third fixing means (5) are formed by a first element (5.1.) with a fractured configuration and a second L-shaped element (5.2).

10. A fixing device for solar panels according to claim 10, **characterised in that** the first element (5.1) with the fractured configuration is in turn formed by four sections, a first vertical section (5.1.1), a second lower horizontal section (5.1.2) connected to the first section (5.1.1), a third vertical section (5.1.3) connected to the second section (5.1.2) and a fourth horizontal section (5.1.4) connected to the third section (5.1.3) that extends outwards with respect to the main body formed by the first element (5.1).

11. A fixing device for solar panels according to claim 11, **characterised in that** the first section (5.1.1) has on its free upper end a third flap (5.1.1.1) for coupling onto a complementary configuration (1.1.2) formed by a fifth flap located on the first base profile (1.1), the second section (5.1.2) has a mounting hole (5.1.2.1) for the coupling of the third fixing means (5) to the first fixing means (3), and the fourth section (5.1.4) has an opening to join the first element formed by the third fixing means (5) with the second element (5.2) forming such element.

12. A fixing device for solar panels according to claim 10, **characterised in that** the second L-shaped element (5.2) is formed by a first horizontal section (5.2.1) and a second vertical section (5.2.2) connected to the first section (5.2.1).

13. A fixing device for solar panels according to claim 13, **characterised in that** the first section (5.2.1) has an opening (5.2.1.1) for coupling this second element (5.2) with the first element (5.1) forming the third fixing means (5) and **in that** the second section (5.2.2) has on its free upper end a sixth flap (5.2.2.1) that allows the coupling of this element onto the first base profile (1.1) and, specifically, onto a complementary configuration (1.1.2) formed by a seventh flap located on the first base profile (1-1).

14. A fixing device for solar panels according to claim 1, **characterised in that** the first fixing means (3) are formed by two plates (3.3) having openings and/or fixing means for their coupling both to the first base profile (1.1) and to the surface.

15. A fixing device for solar panels according to claim 1, **characterised in that** it comprises transverse profiles (2) used onto which the solar panels are assembled, which form parallel planes to the plane of the solar plates and which are fixed by fixing means (7) onto the triangular subassemblies (1), allowing the sliding of said transverse profiles (2) with respect to the triangular subassemblies (1) in a longitudinal and/or transverse direction.
